# FASCICULE DE BREVET EUROPEEN

(11) **EP 0 493 566 B1**
(45) Date de publication et mention de la délivrance du brevet: **04.10.1995**
(21) Numéro de dépôt: 91913276.1
(22) Date de dépôt: 12.07.1991
(51) Int. Cl.: F16H 61/36, F16H 59/04

(54) **SELECTEUR DE MANOEUVRE DE TRANSMISSION MANUELLE**
SCHALTVORRICHTUNG FÜR EIN HANDGESCHALTETES GETRIEBE
MANUAL TRANSMISSION HANDLING SELECTOR

(30) Priorité: 23.07.1990 FR 9009387
(43) Date de publication de la demande: 08.07.1992
(73) Titulaire: SOCIETE CLUSIENNE D'HOLOGERIE ET D'APPAREILS DE PRECISION, F-4300 Cluses (US)
(72) Inventeur: CHEVALLIER, André, F-38700 Corenc (FR); RAPIN, Georges, F-74300 Cluses (FR)
(74) Mandataire: Ramey, Daniel
(86) Numéro de dépôt international: FR9100576
(87) Numéro de publication internationale: WO9201880

(56) Documents cités:
- DE-A- 3 529 559
- FR-A- 1 376 313
- US-A- 2 250 820
- Patent Abstracts of Japan, vol. 9, no. 133 (P-362)[1856] 08 juin 1985, & JP,A,6015723 (NISSAN JIDOSHA) 26 janvier 1985

## Description

L'invention concerne un sélecteur de manoeuvre de transmission manuelle du type transmettant les mouvements d'un levier de changement de vitesses par l'intermédiaire de deux câbles flexibles gainés vers une boîte de vitesses.

Le sélecteur est l'organe qui transforme le mouvement du levier de vitesses en mouvement de passage après avoir sélectionné un rapport. On peut schématiser sa fonction pour une boîte à quatre rapports par la lettre H dans laquelle le parcours de la barre horizontale permet de sélectionner soit le rapport 1 ou 2, soit le rapport 3 ou 4 et le parcours des jambes verticales, pour la jambe gauche conduit en haut à la première vitesse, en bas à la seconde vitesse et pour la jambe droite en haut à la troisième vitesse et en bas à la quatrième vitesse. Suivant ce schéma qui n'a pour but que de bien faire comprendre la fonction d'un sélecteur, quand on quitte une vitesse, on est obligé de passer par la barre horizontale du H et à cet endroit, toutes les possibilités sont ouvertes quant au choix de la vitesse. Cet exemple peut être étendu à des boîtes avec un plus grand nombre de rapports en ajoutant au schéma en H des barres horizontales et des jambes verticales.

Les câbles flexibles gainés destinés à la transmission de forces de poussée et de traction sont bien connus. Ils ont été utilisés dès le début de l'automobile pour transmettre à distance toutes sortes d'efforts (freins, embrayages, starters, etc...). Ils ont déjà également été utilisés pour des efforts de passage et de sélection des vitesses.

Des sélecteurs à câbles peuvent être placés dans des véhicules sur les colonnes de direction, sur le tableau de bord ou au plancher. Ce système a pour principal inconvénient de rassembler toute une série de jeux qui créent un effet désagréable lors d'un passage de vitesse, car le conducteur dispose alors d'un levier inconsistant et n'a pas la sensation d'un passage net et précis de la vitesse.

Un autre moyen de transmettre les commandes du levier de vitesses est la transmission rigide soit directement sur la boîte de vitesses soit déportée par tout un système de barres et de tringleries qui présente des avantages quant à la précision du passage et de la sélection et donne au conducteur la sensation qu'il fait corps avec sa mécanique. Malheureusement, son inconvénient majeur est d'être lourde et de circonscrire la position de la boîte de vitesses à proximité du levier ou de telle façon que les barres de passage et de sélection ne soient pas gênées par le moteur ou les organes annexes. Compte tenu de la réduction de la place disponible pour la mécanique dans les véhicules, il devient souvent difficile, voire impossible, de réaliser une commande à barres à l'endroit où l'on souhaite implanter la boîte de vitesses.

Par le document US-A-2.250.820, on connaît un système de sélection et de transmission à câbles dans lequel l'extrémité d'un levier de vitesses agit sur une première pièce déplaçable longitudinalement et reliée à un câble de passage de vitesse, et agit également sur une seconde pièce déplaçable longitudinalement et en rotation autour de l'axe longitudinal de déplacement de la première pièce, cette seconde pièce étant reliée au câble de sélection de vitesse par l'intermédiaire d'une articulation coulissante et d'un levier de renvoi monté pivotant sur un boîtier. La transmission qui relie le levier de vitesse au câble de sélection de vitesse est complexe, encombrante et peu précise, avec des jeux importants et favorise en outre la transmission des vibrations au levier de vitesse.
L'invention, permet d'éliminer ces différents inconvénients, au moyen du sélecteur de manoeuvre à câbles décrit en revendication 1.

Le sélecteur selon l'invention permet de simuler un passage rigide et mécanique sans jeu et il établit une sensation de passage mécanique et de verrouillage de vitesse malgré l'interposition du câble à gaine souple.

Il permet d'avoir une position de la boîte de vitesses éloignée du levier de commande et de changer cette position à moindre frais sans aucune modification du sélecteur. Grâce au sélecteur conforme à l'invention, on obtient une construction économique fiable et peu encombrante compte tenu de la nécessité d'un nombre réduit de composants par rapport aux dispositifs de l'art antérieur. Enfin, le dispositif conforme à l'invention permet au constructeur d'empêcher un accès facile à la marche arrière grâce à un système de mise en oeuvre simple sans modifier les éléments constructifs du sélecteur.

L'invention est exposée ci-après plus en détail à l'aide de dessins représentant seulement un mode d'exécution.

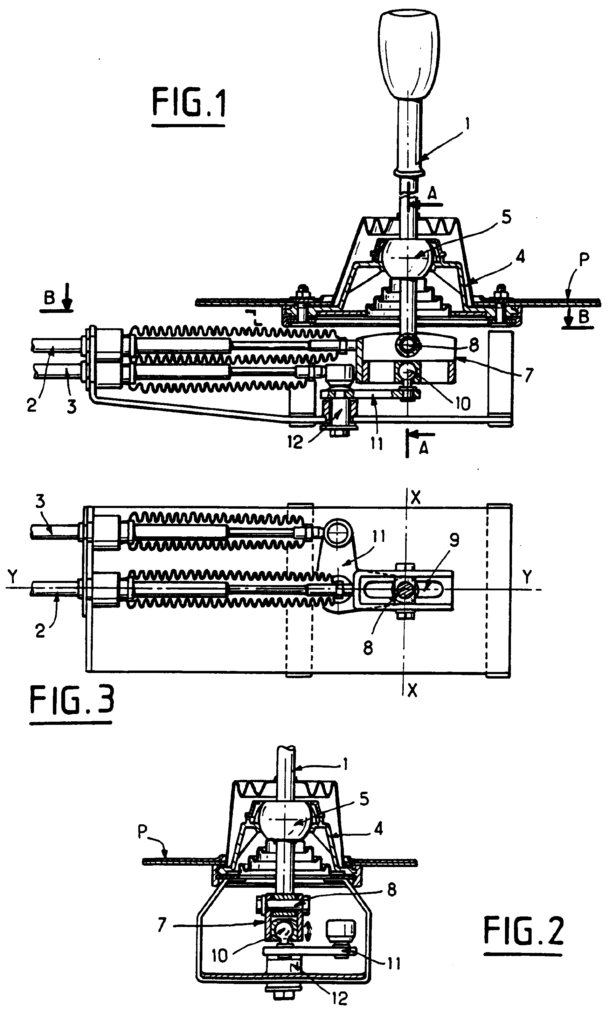

- la figure 1 est une vue en coupe longitudinale du sélecteur conforme à l'invention ;
- les figures 2 et 3 sont des vues en coupe selon AA et BB ;
- la figure 4 est une vue de détail représentant une vue de dessus de la première pièce du sélecteur reliée au câble de passage ;
- les figures 5 et 6 sont des vues en coupe longitudinale et en coupe transversale selon AA d'une variante de réalisation ;
- la figure 7 est une vue en coupe longitudinale de liaison de la gaine de passage des vitesses avec sa tige de liaison ;
- les figures 8A à 8C sont des schémas représentant le déplacement relatif du levier de vitesses en vue de gauche et de la pièce reliée au câble de sélection en vue de dessus ;
- les figures 9 à 11 représentent un agencement conforme à l'invention empêchant le passage direct de la marche arrière ;
- les figures 12 à 14 représentent en coupe longitudinale, coupée partiellement, une seconde variante de la réalisation du sélecteur ainsi qu'en vues en coupe selon B-B et C-C ;
- les figures 15 à 17 représentent en coupe longitudinale une vue correspondant à une troisième variante de réalisation, ainsi qu'en vues en coupe selon D-D et selon E-E.
- les figures 18 et 19 sont des vues de détail du sélecteur conforme à l'invention représentant les agencements de friction.

Le sélecteur de manoeuvre conforme à l'invention est logé dans un boîtier 4 fixé directement ou par des silentblocs interposés au plancher P du véhicule. Sur le dessus du boîtier 4 sort le levier de commande de vitesse 1 à axe plus ou moins vertical. Deux gaines de sortie horizontales 2 et 3 sont fixées à la base du boîtier 4. L'une contient le câble de passage des vitesses 2 et l'autre le câble de sélection 3. Ces deux gaines 2, 3 aboutissent à la boîte de vitesses. Les câbles qu'elles contiennent agissent par poussée ou traction sur les organes correspondants de la boîte de vitesses pour sélectionner ou passer les vitesses.

Le levier de commande 1 comprend en son milieu une rotule 5 placée dans un palier sphérique solidaire du boîtier 4 du sélecteur. Sans autre mécanisme associé, le levier pourrait donc rotuler dans tous les sens. Pour limiter ses déplacements dans une direction correspondant aux jambes verticales et aux barres horizontales d'un schéma en H, éventuellement prolongés, sous la liaison par rotule 5 est mis en place un système d'entraînement limitant son déplacement d'une part et transmettant d'autre part son déplacement aux câbles 2 et 3.

Tout d'abord à la partie inférieure du levier 1 est prévue une liaison directe avec le câble de passage 2. Cette liaison directe est réalisée par une pièce intermédiaire qui sera décrite plus loin. Par cette liaison, le levier 1 est empêché de tourner angulairement autour de son axe vertical. Par contre il peut s'incliner en avant et en arrière en déplaçant le câble de passage 2. A l'autre extrémité du câble 2 se trouve la boîte de vitesses où ce mouvement est transmis directement en poussée ou en traction pour passer la vitesse.

L'inclinaison à droite ou à gauche du levier 1 n'a pas d'action de poussée ou de traction sur le câble de passage 2 mais par contre entraîne le déplacement du câble de sélection 3 grâce à la coopération d'une autre pièce intermédiaire de transmission.

Les pièces de transmission vont maintenant être décrites plus précisément.

Selon une première variante l'extrémité inférieure du levier 1 est reliée par une articulation 8 rotative autour d'un axe XX horizontal perpendiculaire aux câbles 2, 3 à une première pièce 7 à laquelle est fixée le câble de passage 2. Ainsi la rotation du levier vers l'avant ou vers l'arrière entraîne en poussée ou en traction le câble de passage 2.

La première pièce 7 comprend au dessous de son articulation 8 une partie inférieure comportant une rainure 9. Cette rainure 9 reçoit une rotule 10 montée sur la deuxième pièce 11. Cette deuxième pièce 11 est une pièce coudée du type pièce de renvoi. Elle est montée en rotation sur un axe 12 fixé sur la base du boîtier 4 et supporte la rotule 10 par une de ses extrémités. Son autre extrémité est reliée au câble de sélection 3 par une articulation à rotule. Ainsi une rotation du levier 1 vers la droite ou vers la gauche entraîne la poussée ou la traction du câble de sélection 3 qui à son autre extrémité sélectionne le rapport choisi.

Par l'agencement des première et seconde pièces 7 et 11, il est possible de commander le câble de passage 2 sans agir sur celui de sélection 3 ou d'agir sur le câble de sélection 3 sans déplacer le câble de passage 2.

Un agencement de la première pièce 7 va maintenant être décrit plus précisément.

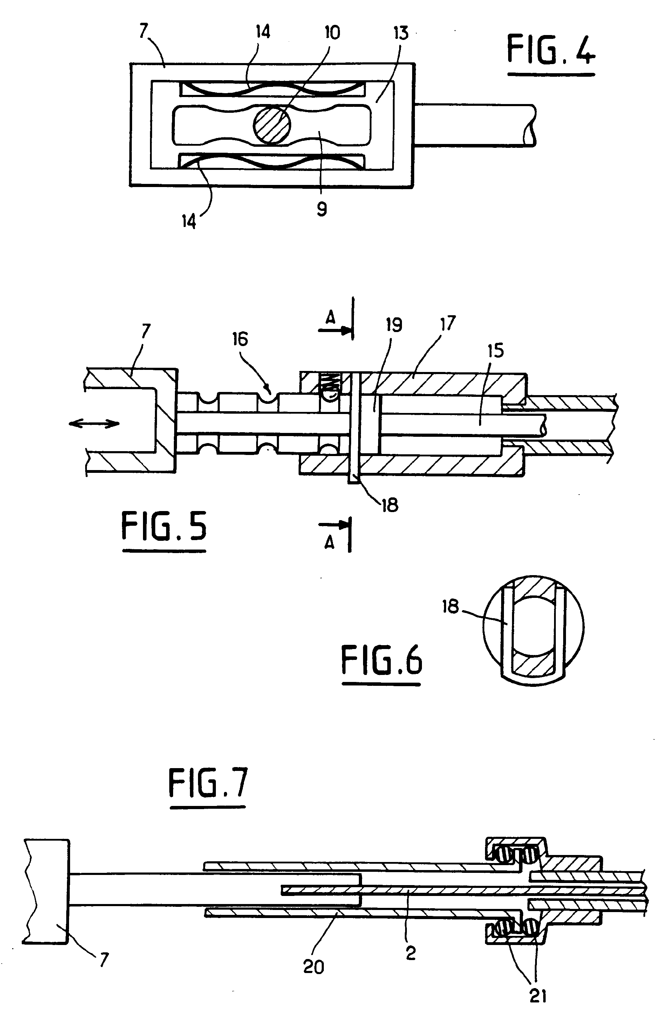

La pièce 7 comporte un boîtier métallique recevant une garniture en matière plastique 13 dans laquelle est conformée la rainure 9. Comme représentée sur la figure 4, cette rainure 9 comporte deux parties rétrécies sollicitées par des lames de ressort 14. Entre ces parties rétrécies et entre celles-ci et les extrémités de la rainure sont donc conformés des logements où peut se loger la rotule 10. Ainsi le conducteur doit effectuer un effort dosé pour passer d'une position de la rotule à une autre, grâce aux lames de ressort 14.

A la place des rétrécissements de la rainure, il peut être agencé un système de billes sollicitées par ressort.

Selon un autre mode de réalisation (figures 5 et 6) la rainure est de largeur constante et l'agencement de butée est réalisé par interposition d'une pièce spéciale entre la première pièce 7 et la tige 15 sur laquelle est serti le câble de passage 2. Cette pièce 16 comporte trois gorges et coulisse dans une pièce tubulaire 17 sertie sur la gaine de câble. Cette pièce tubulaire 17 porte une bille soumise à un ressort qui vient en prise avec l'une des gorges de la pièce 16 selon le déplacement vers l'avant ou l'arrière du levier de vitesses. Une butée extrême est réalisée par la butée de la pièce tubulaire 17 sur la pièce 7 ; l'autre butée extrême est obtenue par une épingle 18 représentée plus précisément sur la vue en coupe AA. En effet la pièce 16 est de section cylindrique tronquée coopérante avec l'épingle sauf en sa partie d'extrémité 19 qui est cylindrique et qui vient donc buter contre l'épingle 18 en fin de course.

Comme on peut le comprendre, lors du pivotement du levier de vitesses 1 vers la droite ou vers la gauche, le câble de sélection 3 est soumis à une traction ou une poussée et le câble de passage 2 subit un certain déplacement angulaire. Pour absorber ce déplacement angulaire, le câble de passage 2 est serti sur une tige fixée à la pièce 7. Comme on peut le voir sur la figure 7, l'extrémité de la tige et le câble 2 sont logés dans une pièce de guidage 20 métallique articulée dans une cavité du support de gaine qui est fixée sur le boîtier 4. Dans cette cavité sont logées des rondelles en caoutchouc 21 fixées à l'extrémité de la pièce de guidage 20. Ainsi le câble de passage 2 peut subir le déplacement angulaire résultant du déplacement vers la droite ou la gauche du levier de vitesses 1.

Le même agencement équipe le câble de sélection 3, afin de permettre son déplacement angulaire.

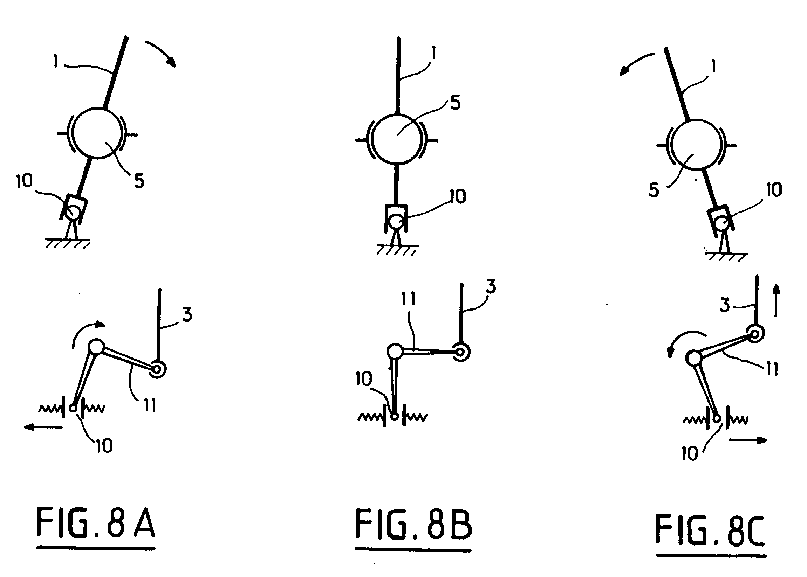

Les figures 8A, 8B et 8C schématisent le déplacement relatif du levier de vitesses 1 et de la pièce de renvoi 11.

Lors du déplacement vers la gauche du levier de vitesses 1, la rotule 10 est donc translatée vers la gauche et le câble de sélection 3 est tiré (figure 8A).

La figure 8B correspond à la position de "point mort", où le levier de vitesses est sensiblement vertical.

La figure 8C représente le levier de vitesses 1 pivoté vers la droite et la rotule 10 déplacée dans le même sens entraînant une rotation de la pièce de renvoi 11 qui pousse alors le câble de passage 3.

Comme on peut le voir sur ces figures, le levier de vitesses est automatiquement ramené au point mort (en général situé entre les rapports 3 et 4) grâce à un agencement de ressorts sollicitant la rotule 10 et disposés de part et d'autre de celle-ci.

Certains constructeurs souhaitent compliquer l'accès à la marche arrière pour éviter son enclenchement involontaire, ce qui pourrait occasionner un endommagement important de la boîte de vitesses. Dans ce but, l'invention propose un agencement particulièrement simple.

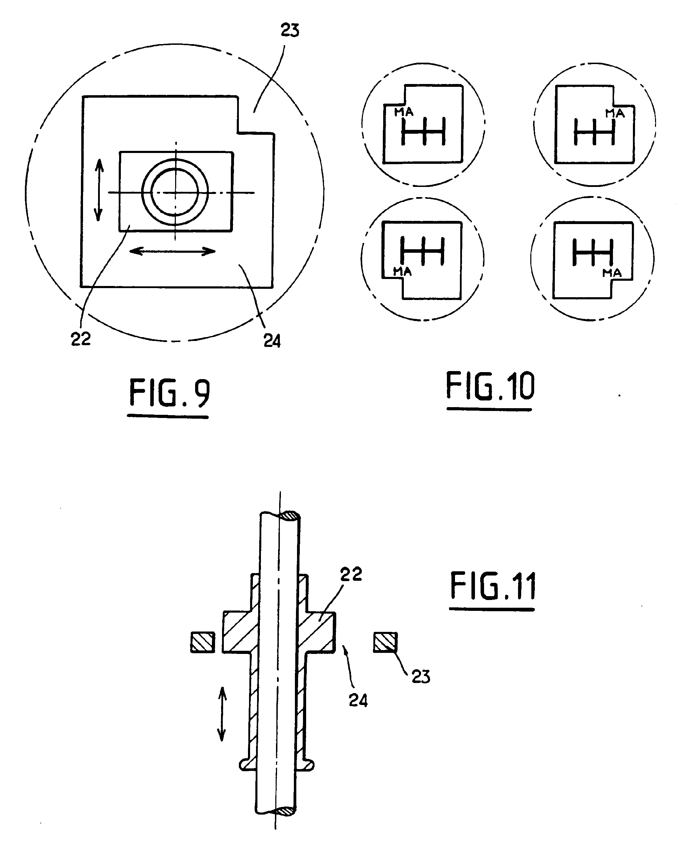

Cet agencement est représenté sur les figures 9 à 11.

Pour ce faire, le levier de vitesses comporte une butée 22 escamotable depuis le pommeau du levier de façon classique. Au dessus de la rotule 5 est disposé un écran 23 ; de préférence cet écran est le couvercle du palier de la rotule 5 dans lequel est conformée une cavité 24 de forme particulière. Cette forme comme on peut le voir sur les figures 9 et 10 est un carré ou un rectangle dont l'un des angles n'est pas dégagé, c'est-à-dire est remplacé par un carré de matière. La butée 22 est quant à elle de forme rectangulaire. On comprendra que lorsqu'elle n'est pas escamotée, il est impossible pour le levier 1 d'effectuer un pivotement vers l'avant en position extrême droite dans le cas de la figure 9.

L'avantage de cet agencement sur le couvercle du palier de la rotule 5 est que lors du montage il est possible de disposer ce couvercle selon l'une quelconque des positions représentées sur la figure 10 selon l'emplacement où le constructeur souhaite positionner la marche arrière.

Pour passer la marche arrière, il suffit d'escamoter la butée 22 vers le haut ou vers le bas. Dans ce dernier cas, elle s'escamote dans la rotule 5 dans la position "point mort". Un système de ressort replace automatiquement la butée 22 au niveau du couvercle de palier de rotule dès que le levier de vitesses 1 est ramené au point mort à partir de la position "marche arrière".

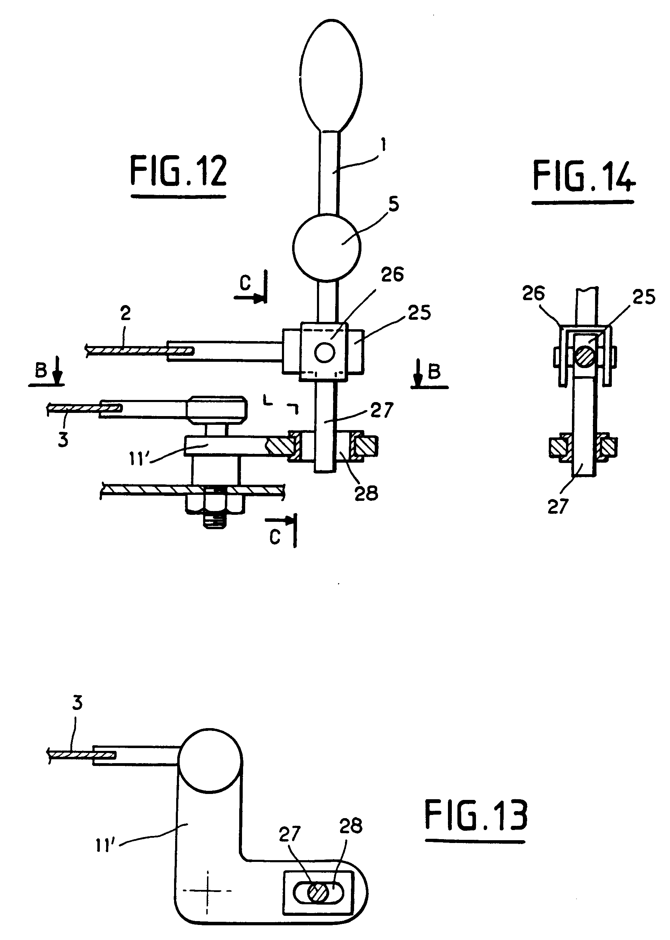

Les figures 12 à 14 représentent une seconde variante du sélecteur conforme à l'invention.

Dans le cas de la seconde variante, le levier 1 supporté par la rotule 5 logée dans un palier du boîtier est articulé selon un axe horizontal perpendiculaire aux câbles 2,3 à une pièce 25 qui se trouve donc suspendue au levier.

A une extrémité de cette pièce 25 est relié le câble de passage 2 qui est donc actionné par la rotation vers l'avant ou l'arrière du levier 1. En dessous de la pièce 25 est agencée de façon rigide, une barre 27 perpendiculaire à la pièce 25 et dirigée vers le bas. Cette barre 27 vient en prise avec une rainure 28 pourvue d'une garniture en matière plastique et agencée sur une seconde pièce 11′ analogue à la pièce 11 déjà décrite, à cet agencement de rainure près. L'agencement de rainure 28 peut être équipé d'une garniture identique à celle déjà décrite selon la figure 4 afin de déterminer des butées de déplacement du câble de passage 2. A la place de cet agencement de la rainure, un dispositif de butée par billage tel que déjà décrit selon les figures 5 et 6 peut être installé à l'extrémité de la pièce 25 entre celle-ci et le câble de passage 2.

Ainsi, le déplacement vers la gauche ou la droite du levier 1 entraîne une rotation de la pièce 11′ selon son axe d'articulation fixé au boîtier et à son autre extrémité la poussée ou la traction du câble de sélection 3.

Le retour au "point mort" est réalisé par une sollicitation par ressort de la pièce 25 ou de la barre 27.

L'articulation 26 présente suffisamment de jeu pour permettre le débattement de la pièce 25 translatée longitudinalement d'une part et le débattement de la pièce 25 déplacée dans un plan horizontal d'autre part. De préférence, cette articulation 26 est une articulation à étrier.

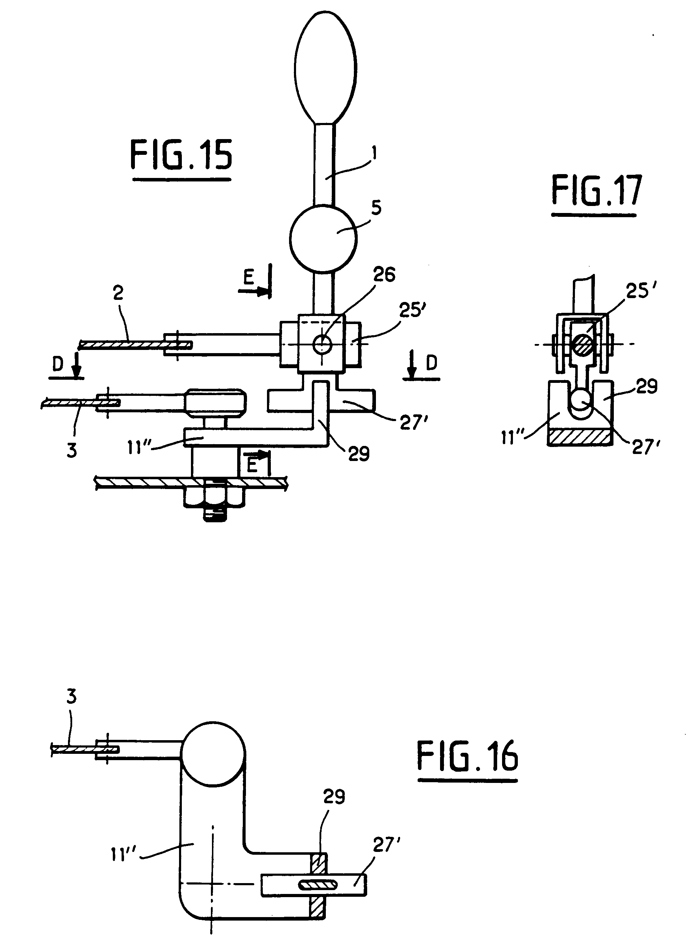

Les figures 15 à 17 représentent une troisième variante de réalisation.

Selon cette troisième variante, le levier 1 supporté par la rotule 5 logée dans un palier du boîtier est articulé selon un axe horizontal perpendiculaire aux câbles 2, 3 à une pièce 25′ horizontale qui se trouve donc suspendue au levier 1.

Cette pièce 25′ est reliée par une de ses extrémités au câble de passage 2. Elle comporte dans sa partie inférieure une tige 27′ rigidement fixée, parallèle aux câbles (2, 3) et qui se trouve logée dans une fourche 29 formée sur la seconde pièce 11˝. Cette pièce 11˝ est donc identique aux pièces déjà décrites 11 et 11′, à savoir c'est une pièce coudée articulée à son coude et au lieu de porter une rotule ou une rainure à son extrémité coopérant avec la première pièce 25, elle est formée selon une fourche 29 dirigée vers le haut. La cavité de cette fourche 29 reçoit la tige 27′.

Le fonctionnement d'un tel agencement est analogue à celui des variantes précédentes. Le pivotement vers l'avant et l'arrière entraîne directement la poussée et la traction du câble de passage 2. Le pivotement vers la gauche et la droite entraîne la poussée et la traction du câble de sélection 3 relié par rotule à une extrémité de la seconde pièce 11˝.

Un tel agencement est équipé d'un dispositif de butée par billage tel que déjà décrit selon la figure 5 et la figure 6 et qui peut être installé à l'extrémité de la pièce 25′ entre celle-ci et le câble de passage 2.

Le retour automatique au "point mort" est réalisé par une sollicitation par ressort de la pièce 25′ ou de la partie de fourche 29.

Le sélecteur conforme à l'invention a été ci-dessus décrit relativement à ses éléments essentiels.

Afin d'éviter les défauts de certaines boîtes de vitesses qui présentent des jeux excessifs et des points durs trop marqués, le sélecteur décrit comporte des agencements de friction aux différents emplacements de liaison des pièces entre elles et des pièces avec le boîtier.

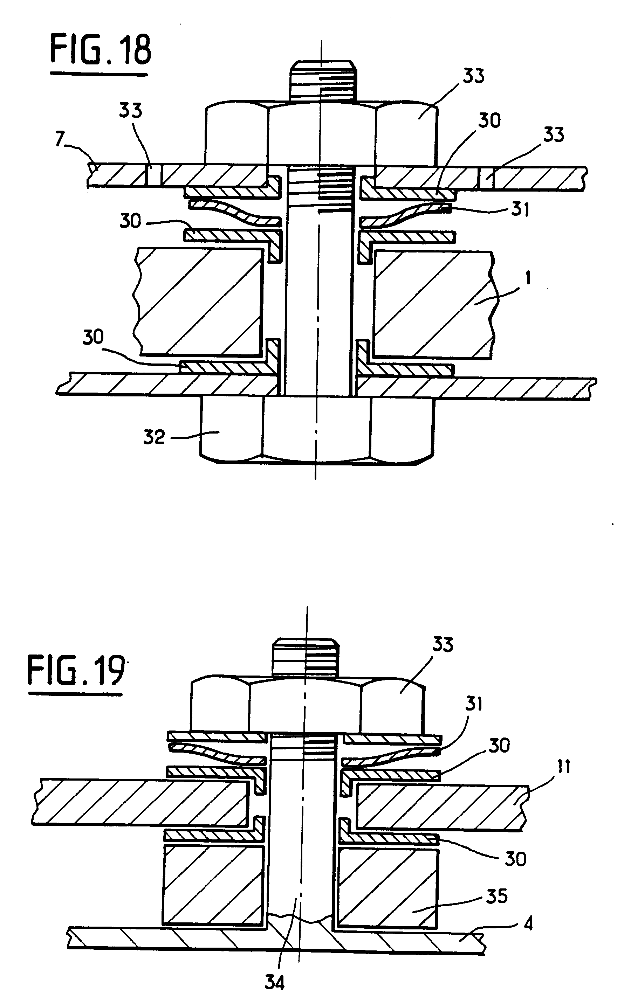

A titre illustratif, sont représentés sur les figures 18 et 19, des agencements de friction mis en place sur le sélecteur à l'emplacement de liaison du levier de vitesse 1 avec la première pièce 7, 25, 25′ et à l'emplacement de liaison de la seconde pièce 11 avec la base du boîtier 4.

Selon la figure 18, des rondelles à épaulement en matière synthétique 30 sont interposées aux emplacements de contact de l'extrémité inférieure du levier de vitesse 1 et des parois verticales de la première pièce 7 ou de l'étrier de liaison à la première pièce 25, 25′.

Grâce à ces rondelles, est interposée une rondelle élastique 31 qui est plus ou moins sollicitée selon le serrage de l'ensemble vis 32 et écrou 33 qui forment l'axe de pivotement du levier 1 sur la pièce 7.

Les rondelles 30 permettent donc la friction de ces éléments déformables et le serrage de l'écrou 33 permet de régler l'importance de cette friction. Pour obtenir ce réglage, une des parois de la pièce 7 ou de l'étrier de liaison à la première pièce 25, 25′ est coupée selon deux lignes 33 réalisées par exemple par deux traits de scie.

Selon la figure 19, le pivot de la pièce 11 par rapport au boîtier 4 est réalisé par une tige filetée 34 soudée à la base du boîtier.

Une rondelle entretoise 35 supporte la pièce 11 à une distance adéquate de la base du boîtier. Des rondelles en matière synthétique 30 permettent la friction provoquée par le déplacement de la seconde pièce 11.

Un agencement de rondelles élastiques 30 et d'écrou 33 permet le réglage de cette friction.

## Revendications

1. Sélecteur de manoeuvre de transmission manuelle associé à un levier de vitesse (1) pour la commande d'une boîte de vitesse au moyen de deux câbles flexibles gainés (2,3), dans lequel le levier de vitesse (1) est articulé au moyen d'une rotule (5) sur le boîtier (4) du sélecteur et est relié d'une part au câble (2) de passage de vitesse par l'intermédiaire d'une première pièce (7, 25, 25′) déplaçable d'avant en arrière et inversement, et d'autre part au câble (3) de sélection de vitesse par l'intermédiaire d'une seconde pièce (11, 11′, 11˝) formant levier de renvoi, montée pivotante autour d'un axe (12) sur le boîtier (4), caractérisé en ce que l'extrémité inférieure du levier (1) est montée en rotation sur la première pièce (7, 25, 25′) autour d'un axe transversal (8, 26) perpendiculaire aux câbles (2, 3) et en ce que la première pièce (7, 25, 25′) est reliée à la seconde pièce (11, 11′, 11˝) par une articulation comprenant une fente ou rainure (9, 28) formée dans l'une des deux pièces parallèlement aux câbles (2, 3) et dans laquelle est engagé et guidé un organe (10, 27, 27′) porté par l'autre des deux pièces.

2. Sélecteur selon la revendication 1, caractérisé en ce que ladite rainure (9) est formée dans la première pièce (7) et reçoit une rotule (10) montée sur l'extrémité de la seconde pièce (11).

3. Sélecteur selon la revendication 2, caractérisé en ce que la rainure (9) est réalisée dans une garniture (13) de matière plastique logée dans la première pièce (7).

4. Sélecteur selon la revendication 3, caractérisé en ce que la rainure (9) comporte au moins une partie rétrécie sollicitée par deux lames de ressort (14) disposées de part et d'autre de la garniture (13).

5. Sélecteur selon la revendication 1, caractérisé en ce que la rainure (28) est formée à une extrémité de la seconde pièce (11′) et reçoit une barre (27) portée par la première pièce 25 et orientée vers le bas.

6. Sélecteur selon la revendication 5, caractérisé en ce que la rainure (28) est réalisée dans une garniture de matière plastique logée dans la seconde pièce (11′).

7. Sélecteur selon la revendication 6, caractérisé en ce que la rainure (28) comporte au moins une partie rétrécie sollicitée par deux lames de ressort (14) disposées de part et d'autre de la garniture.

8. Sélecteur selon la revendication 1, caractérisé en ce que la première pièce (25′) comporte une tige (27′) parallèle au câble de passage (2) et qui s'engage dans une fourche (29) dirigée verticalement et formée par une extrémité repliée de la seconde pièce (11˝).

9. Sélecteur selon l'une des revendications précédentes, caractérisé en ce que la seconde pièce (11, 11′, 11˝) est reliée au câble de sélection (3) par une articulation à rotule.

10. Sélecteur selon l'une des revendications précédentes, caractérisé en ce que l'une des première et seconde pièces est sollicitée par un ressort dans le sens de son déplacement perpendiculaire au câble de sélection (3).

11. Sélecteur selon l'une des revendications 1 à 3, 5, 6, 8 à 10, caractérisé en ce qu'entre la première pièce (7, 25, 25′) et le câble de sélection (2) est interposée une pièce de butée (17) dans laquelle coulisse une tige (16) fixée sur la première pièce (7, 25, 25′) et comprenant au moins deux gorges de réception d'une bille montée sur la pièce de butée (17) et sollicitée par un ressort.

12. Sélecteur selon l'une des revendications précédentes, caractérisé en ce que l'extrémité du câble de passage (2) et/ou du câble de sélection (3) est sertie sur une tige de liaison et est logée dans une pièce de guidage (20) articulée dans une cavité du support de gaine fixé sur le boîtier (4).

13. Sélecteur selon l'une des revendications précédentes, caractérisé en ce que des rondelles de friction (30) en matière synthétique sont montées sur les axes de pivotement du levier (1) sur la première pièce (7, 25, 25′) et de la seconde pièce (11, 11′, 11˝) sur le boîtier (4) et sont sollicitées par des rondelles élastiques (31).

## Patentansprüche

1. Schaltvorrichtung für eine handbetätigbare Gangschaltung mit einem Schalthebel (1) zum Steuern eines Getriebes mit Hilfe von zwei umhüllten Seilen (2, 3), wobei der Schalthebel (1) über ein Kugelgelenk (5) an dem Gehäuse (4) der Schaltvorrichtung angelenkt ist und einerseits mit einem Schaltseil (2) unter Zwischenschaltung eines ersten Teils (7, 25, 25′), welcher von vorne nach hinten und umgekehrt verschieblich ist, und andererseits mit einem Wählseil (3) unter Zwischenschaltung eines zweiten Teils (11, 11′, 11˝) verbunden ist, der einen Umlenkhebel bildet, welcher um eine Achse (12) schwenkbar in dem Gehäuse (4) angeordnet ist, **dadurch gekennzeichnet, daß** das untere Ende des Hebels (1) um eine normal zu den Seilen (2, 3) ausgerichtete Querachse (8, 26) drehbar an dem ersten Teil (7, 25, 25′) befestigt ist **und daß** der erste Teil (7, 25, 25′) mit dem zweiten Teil (11, 11′, 11˝) über ein Gelenk verbunden ist, welches einen Schlitz oder eine Rille (9, 28) aufweist, die parallel zu den Seilen (2, 3) in einem der zwei Teile ausgebildet und in welcher ein Organ (10, 27, 27′) des anderen der zwei Teile geführt oder gelagert ist.

2. Schaltvorrichtung nach Anspruch 1, **dadurch gekennzeichnet, daß** die Rille (9) in dem ersten Teil (7) ausgebildet ist und ein Kugelgelenk (10) aufnimmt, welches an dem Ende des zweiten Teils (11) ausgebildet ist.

3. Schaltvorrichtung nach Anspruch 2, **dadurch gekennzeichnet, daß** die Rille (9) in einem Einsatz (13) aus Kunststoff ausgebildet ist, welcher in dem ersten Teil (7) aufgenommen ist.

4. Schaltvorrichtung nach Anspruch 3, **dadurch gekennzeichnet, daß** die Rille (9) zumindest eine Einengung aufweist, welche durch zwei zu beiden Seiten des Einsatzes (13) angeordneten Blattfedern (14) belastet ist.

5. Schaltvorrichtung nach Anspruch 1, **dadurch gekennzeichnet, daß** die Rille (28) an einem Ende des zweiten Teils (11′) angeordnet ist und eine Stange (27) aufnimmt, die von dem ersten Teil (25) gehalten wird und nach unten gerichtet ist.

6. Schaltvorrichtung nach Anspruch 5, **dadurch gekennzeichnet, daß** die Rille (28) in einem Einsatz aus Kunststoff ausgebildet ist, der in dem zweiten Teil (11′) aufgenommen ist.

7. Schaltvorrichtung nach Anspruch 6, **dadurch gekennzeichnet, daß** die Rille (28) zumindest eine Einengung aufweist, die durch zwei zu beiden Seiten des Einsatzes angeordnete Blattfedern (14) belastet ist.

8. Schaltvorrichtung nach Anspruch 1, **dadurch gekennzeichnet, daß** der erste Teil (25′) eine parallel zu dem Schaltseil (2) verlaufende Stange (27′) aufweist, die in eine vertikal ausgerichtete Gabel (29) eingreift, welche durch einen ausgenommenen Teilabschnitt des zweiten Teils (11′) gebildet wird.

9. Schaltvorrichtung nach einem der vorigen Ansprüche, **dadurch gekennzeichnet, daß** der zweite Teil (11, 11′, 11˝) über ein Kugelgelenk mit dem Wählseil (3) verbunden ist.

10. Schaltvorrichtung nach einem der vorigen Ansprüche, **dadurch gekennzeichnet, daß** einer der ersten und zweiten Teile mittels einer Feder in Richtung seiner Verschiebung normal zum Wählseil (3) belastet ist.

11. Schaltvorrichtung nach einem der Ansprüche 1 bis 3, 5, 6, 8 bis 10, **dadurch gekennzeichnet, daß** zwischen dem ersten Teil (7, 25, 25′) und dem Schaltseil (2) eine Abstützung (17) angeordnet ist, in welcher eine Stange (16) gleitet, die an dem ersten Teil (7, 25, 25′) befestigt ist und zumindest zwei Hälse zur Aufnahme einer Kugel aufweist, die an der Abstützung (17) angeordnet und durch eine Feder belastet ist.

12. Schaltvorrichtung nach einem der vorigen Ansprüche, **dadurch gekennzeichnet, daß** das Ende des Schaltseils (2) und/oder des Wählseils (3) auf eine Verbindungsstange aufgepreßt und in einem Führungsteil (20) untergebracht ist, welcher in einem Hohlkörper angelenkt ist, der an dem Gehäuse 4 befestigt ist.

13. Schaltvorrichtung nach einem der vorigen Ansprüche, **dadurch gekennzeichnet, daß** an der Schwenkachse des Hebels (1) an dem ersten Teil (7, 25, 25′) und an der Schwenkachse des zweiten Teils (11, 11′, 11˝) an dem Gehäuse (4) Spannscheiben (30) aus einem synthetischen Material angeordnet sind, die durch elastische Unterlagscheiben (31) belastet sind.

## Claims

1. A selector mechanism for a manual transmission associated with a gear lever (1) to control a gear box by means of two sheathed flexible cables (2, 3), in which the gear lever (1) is swivel-mounted by means of a ball (5) on the housing (4) of the selector mechanism and is connected firstly to the gear-changing cable (2) via a first part (7, 25, 25′) that is displaceable from front to back and vice versa, and secondly to the gear selection cable (3) via a second part (11, 11′, 11˝) forming a crank that is pivotally mounted about an axis (12) secured to the housing (4), the selector mechanism being characterized in that the bottom end of the lever (1) is rotatably mounted on the first part (7, 25, 25′) about a transverse axis (8, 26) perpendicular to the cables (2, 3), and in that the first part (7, 25, 25′) is connected to the second part (11, 11′, 11˝) via a coupling comprising a slot or groove (9, 28) parallel to the cables (2, 3) and formed in one of the two parts, and in which there is engaged and guided a member (10, 27, 27′) carried by the other one of the two parts.

2. A selector mechanism according to claim 1, characterized in that said groove (9) is formed in the first part (7) and receives a ball (10) mounted on the end of the second part (11).

3. A selector mechanism according to claim 2, characterized in that the groove (9) is made in a lining (13) of plastics material received in the first part (7).

4. A selector mechanism according to claim 3, characterized in that the groove (9) includes at least one narrowed portion biased by two spring blades (14) disposed on either side of the lining (13).

5. A selector mechanism according to claim 1, characterized in that the groove (28) is formed at one end of the second part (11′) and receives a bar (27) carried by the first part (25) and extending downwards.

6. A selector mechanism according to claim 5, characterized in that the groove (28) is made in a lining of plastics material received in the second part (11′).

7. A selector mechanism according to claim 6, characterized in that the groove (28) includes at least one narrowed portion biased by two spring blades (14) disposed on either side of the lining.

8. A selector mechanism according to claim 1, characterized in that the first part (25′) includes a rod (27′) parallel to the change cable (2) and engaged in a vertically-directed fork (29) formed by a folded-up end of the second part (11˝).

9. A selector mechanism according to any preceding claim, characterized in that the second part (11, 11′, 11˝) is connected to the selection cable (3) by a ball joint.

10. A selector mechanism according to any preceding claim, characterized in that one of the first and second parts is biased by a spring in its displacement direction perpendicular to the selection cable (3).

11. A selector mechanism according to any one of claims 1 to 3, 5, 6, and 8 to 10, characterized in that an abutment part (17) is interposed between the first part (7, 25, 25′) and the selection cable (2), a rod (16) fixed on the first part (7, 25, 25′) being slidably received in the abutment part and including at least two grooves for receiving a ball mounted on the abutment part and biased by a spring.

12. A selector mechanism according to any preceding claim, characterized in that the end of the change cable (2) and/or of the selection cable (3) is crimped to a link rod and is received in a guide part (20) rotatably mounted in a cavity of the sheath support that is fixed to the housing (4).

13. A selector mechanism according to any preceding claim, characterized in that friction washers (30) of synthetic material are mounted both on the pivot axis between the lever (1) and the first part (7, 25, 25′), and on the pivot axis between the second part (11, 11′, 11˝) and the housing (4), and are biased by spring washers (31).
